# FASCICULE DE BREVET EUROPEEN

(11) **EP 0 469 946 B1**
(45) Date de publication et mention de la délivrance du brevet: **09.03.1994**
(21) Numéro de dépôt: 91401978.1
(22) Date de dépôt: 16.07.1991
(51) Int. Cl.: B60T 11/20

(54) **Procédé de réglage de la course morte d'un maître-cylindre en tandem et maître-cylindre en tandem pour la mise en oeuvre de ce procédé**
Verfahren zum Einstellen des Anlegehubs eines Tandem-Hauptzylinders und Tandem-Hauptzylinder zur Durchführung des Verfahrens
Procedure for adjusting lost motion of a tandem master cylinder and tandem master cylinder for the execution of this procedure

(30) Priorité: 02.08.1990 FR 9009891
(43) Date de publication de la demande: 05.02.1992
(73) Titulaire: ALLIEDSIGNAL EUROPE SERVICES TECHNIQUES, 93700 Drancy (FR)
(72) Inventeur: Morin, Gérard, Bendix Europe Services Techniques, F-93700 Drancy (FR); Gaffe, François, Bendix Europe Services Techniques, F-93700 Drancy (FR)
(74) Mandataire: Bentz, Jean-Paul

(56) Documents cités:
- EP-A- 0 075 505
- DE-A- 3 424 513
- DE-A- 3 819 737

## Description

La présente invention concerne les maîtres-cylindres en tandem, en particulier destinés à équiper les circuits de freinage hydraulique des véhicules automobiles, et elle concerne plus particulièrement un procédé de réglage de ceux-ci pour en réduire la course morte.

Un maître-cylindre tandem classique est constitué d'un piston primaire et d'un piston secondaire coulissant de façon étanche dans un alésage afin d'y définir deux chambres de pression alimentant chacune un circuit hydraulique lors de l'actionnement du piston primaire. Un ressort est logé dans chaque chambre de pression.

De façon classique, la précontrainte du ressort primaire est plus élevée que celle du ressort secondaire et la longueur du ressort primaire est limitée en extension.

Les chambres de pression sont alimentées chacune en fluide sous basse pression d'une part par un premier orifice reliant un réservoir de fluide sous basse pression à la chambre correspondante par l'intermédiaire d'une coupelle d'étanchéité de type anti-retour, ainsi que par un second orifice appelé trou de dilatation, de dimension plus réduite disposé de manière à être fermé lorsque le piston se meut.

Par convention, on appellera primaires les éléments les plus proches de la pédale de frein, et secondaires les éléments les plus éloignés de celle-ci.

Lors de l'actionnement d'un tel maître-cylindre, soit par la tige de poussée d'un servomoteur d'assistance au freinage, soit directement par la pédale de frein, dans un premier temps, l'effort exercé sur le piston primaire a pour effet d'égaler la précontrainte du ressort associé au piston secondaire et de vaincre les frottements dus aux coupelles d'étanchéité. Dans cette première phase de l'actionnement du maître-cylindre, l'effort exercé sur le piston primaire n'engendre aucune pression hydraulique dans un circuit de freinage. Ensuite, l'effort exercé sur le piston primaire continue à faire avancer le piston secondaire dont le déplacement permet de fermer le trou de dilatation. A ce moment-là, la pression hydraulique commence à croître dans le circuit secondaire et le piston correspondant oppose alors une résistance à son avancement.

Ceci a pour conséquence une compression du ressort primaire ; le trou de dilatation primaire ayant été fermé au début de la course par le piston primaire, la pression hydraulique croit dans la chambre correspondante.

La course morte que l'on veut ici régler est la distance dont il faut mouvoir le piston secondaire pour fermer le trou de dilatation secondaire.

En fonction des tolérances de fabrication des différents éléments composant un maître-cylindre,on conçoit donc que la course morte pourra varier dans une production en série. De plus, dans le but d'obtenir une action de freinage le plus rapidement possible après le début de l'actionnement du maître-cylindre, il est souhaitable que sa course morte soit la plus faible possible.

On connaît de DE-A-38 19737, un procédé compliqué de réglage de la course morte d'un maître-cylindre par insertion de plaque d'écartement et de la modification de la longueur d'une vis de réglage. Ce procédé présente de nombreux inconvénients le rendant impraticable tel que la nécessité d'effectuer le réglage de la course morte du piston secondaire après avoir démonté le maître-cylindre et avant de remettre en place des pistons et ressorts dans le cylindre. Il en résulte donc un réglage imprécis effectué après calculs théoriques et ne pouvant pas tenir compte de la position réelle du trou de dilatation secondaire et des différentes tolérances de fabrication. Il en résulte également des coûts de fabrication non raisonnables.

Or, comme décrit ci-avant, c'est la course morte du piston secondaire qu'il faut minimiser de façon précise puisque la course du piston primaire est nettement plus grande que celle du piston secondaire, et que la pression dans la chambre primaire ne peut pas croître tant que le trou de dilatation secondaire est ouvert.

La présente invention a donc pour objet de fournir un procédé de réglage de la course morte du piston secondaire d'un maître-cylindre qui soit de mise en oeuvre simple et rapide, de façon fiable et peu onéreuse, et qui puisse en outre être appliqué à un maître-cylindre sans nécessiter son démontage.

Dans ce but, l'invention propose un procédé de réglage de la course morte du piston secondaire d'un maître-cylindre en tandem, le maître-cylindre en tandem comprenant dans un alésage un piston primaire définissant avec un piston secondaire une chambre primaire, le piston secondaire définissant avec le fond de l'alésage une chambre secondaire, les chambres primaire et secondaire ayant respectivement des orifices de sortie primaire et secondaire, les chambres primaire et secondaire étant respectivement associées à des trous de dilatation primaire et secondaire, susceptibles d'être fermés par respectivement les pistons primaire et secondaire, la face en regard de la chambre primaire du piston secondaire coopérant avec un manchon dans lequel coulisse librement une tige solidaire du piston primaire et portant une rondelle d'arrêt, un ressort primaire maintenant écarté l'un de l'autre les dits pistons primaire et secondaire dont l'écartement maximal est limité par la dite rondelle d'arrêt, et un ressort secondaire rappelant au repos les pistons primaire et secondaire et présentant une précontrainte au repos inférieure à celle du ressort primaire.

Le procédé comprend les étapes suivantes :
- mettre en place dans l'alésage des pistons et ressorts
- laisser le piston primaire au contact de sa butée d'arrêt au repos
- déplacer le piston secondaire jusqu'à fermer le trou de dilatation secondaire
- détecter la fermeture du trou de dilatation secondaire
- déplacer le piston secondaire jusqu'à juste re-ouvrir le trou de dilatation secondaire
- détecter la re-ouverture du trou de dilatation
- fixer l'écartement maximal

De préférence, la détection de l'ouverture ou de la fermeture du trou de dilatation secondaire est effectuée en injectant dans la chambre secondaire un fluide sous pression, tel de l'air, par l'orifice de sortie du fluide hydraulique sous pression et en contrôlant le passage de ce fluide par le trou de dilatation.

Pour mettre en oeuvre le procédé ci-avant décrit, un orifice taraudé est pratiqué dans le piston primaire de manière à le traverser totalement, l'extrémité de la tige filetée précitée coopérant avec le taraudage de cet orifice et étant accessible de l'extérieur du maître-cylindre pour assurer le réglage de l'écartement maximal entre les deux pistons.

La présente invention a également pour objet un maître-cylindre en tandem spécialement conçu pour la mise en oeuvre de ce procédé, qui soit de conception simple et fiable, et dont la course morte soit minimale.

Dans ce but, l'invention propose un maître-cylindre en tandem comprenant dans un alésage un piston primaire définissant avec un piston secondaire une chambre primaire, et comprenant des moyens pour faire varier l'écartement maximal entre le piston primaire et le piston secondaire depuis l'extérieur du maître-cylindre.

Grâce à un tel maître-cylindre, il est possible de prendre en compte les tolérances de fabrication de façon à réduire la course morte dans le maître-cylindre.

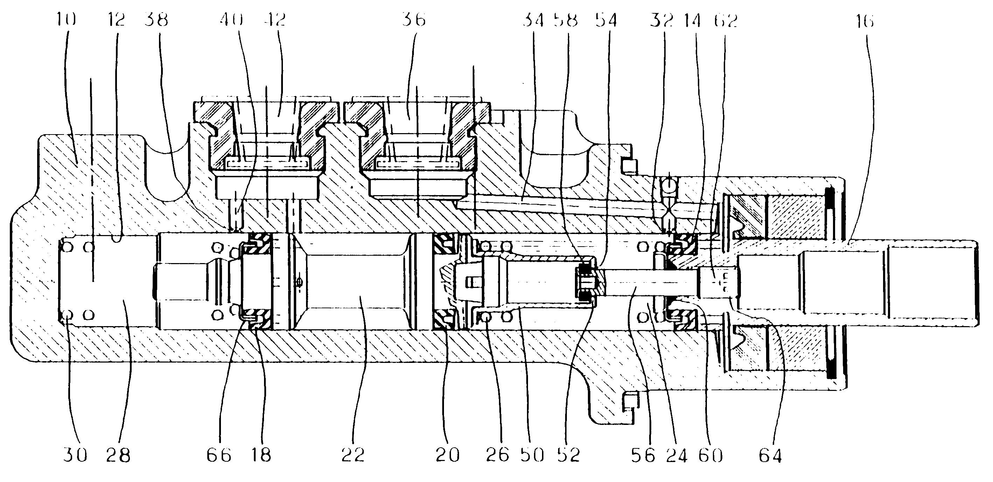

Un mode de réalisation de l'invention va maintenant être décrit, à titre d'exemple nullement limitatif, en se référant au dessin annexé dans lequel :
- la Figure unique est une vue de côté en coupe longitudinale d'un maître-cylindre en tandem mettant en oeuvre le procédé conforme à la présente invention.

On voit sur la Figure un maître-cylindre réalisé conformément à l'invention. Par convention, on appelle "avant" la direction vers laquelle les pièces se déplacent lors de l'actionnement du maître-cylindre et "arrière" la direction vers laquelle les pièces se déplacent pour revenir dans leur position de repos. Sur la Figure, l'avant est à gauche et l'arrière est à droite. Le circuit primaire est donc à droite sur la Figure, et le circuit secondaire à gauche.

Le maître-cylindre de la Figure est constitué d'un corps 10 dans lequel est réalisé un alésage borgne 12 dans lequel coulisse de façon étanche grâce à une coupelle 14, un piston primaire 16. Dans l'alésage coulisse également de façon étanche grâce à une coupelle 18 et à un joint 20 un piston secondaire 22. L'espace délimité dans l'alésage 12 entre le piston primaire 16 et le piston secondaire 22 définit une chambre primaire 24, un ressort primaire 26 étant disposé entre les pistons primaire et secondaire. L'espace délimité par le fond de l'alésage borgne 12 et le piston secondaire définit une chambre secondaire 28 dans laquelle est logé un ressort secondaire 30.

La chambre primaire 24 est reliée à un circuit primaire de freinage (non représenté) par un orifice de sortie primaire (non représenté). De même, la chambre secondaire 28 est reliée à un circuit secondaire de freinage (non représenté) par un orifice de sortie secondaire (non représenté).

Lorsque le maître-cylindre est en position de repos, la chambre primaire 24 communique avec un réservoir de liquide de frein (non représenté) par un trou de dilatation primaire 32, un perçage 34 et un orifice 36, tandis que la chambre secondaire 28 communique avec le réservoir par un trou de dilatation secondaire 38, un perçage 40 et un orifice 42.

Lors de l'actionnement du maître-cylindre par l'application d'un effort sur le piston primaire 16, les deux pistons se déplacent d'abord simultanément du fait que le ressort primaire 26 présente une précontrainte au repos supérieure à celle du ressort secondaire 30, et les coupelles 14 et 18 viennent obturer les trous de dilatation 32 et 38 respectivement. La pression augmentant dans la chambre secondaire 28 s'oppose alors à l'avancement du piston secondaire 22, ce qui a pour effet la compression du ressort primaire 26 et l'élévation de pression dans la chambre primaire 24.

Conformément à l'invention, il est prévu un procédé de réglage pour assurer cette obturation du trou de dilatation secondaire avec une course minimale des deux pistons.

Sur la face arrière du piston secondaire 22, est positionné un manchon cylindrique 50 se terminant vers l'arrière par une partie 52 s'étendant radialement vers l'intérieur et définissant une ouverture 54 dans laquelle coulisse librement une tige 56 solidaire du piston primaire 16. La tige 56 porte à son extrémité avant pénétrant dans l'ouverture 54 une rondelle d'arrêt 58, normalement en appui sur l'épaulement formé par la partie 52 du fait de la présence du ressort 26.

L'extrémité arrière 62 de la tige 56 est filetée extérieurement et est vissée dans un orifice taraudé 64 pratiqué dans le piston primaire de manière à le traverser totalement. Cette extrémité arrière 62 est donc accessible de l'extérieur du maître-cylindre. L'étanchéité entre le piston primaire 16 et la tige 56 est assurée par un joint 60.

On comprend donc que, en vissant ou dévissant plus ou moins la tige 56 dans le piston primaire 16, le piston secondaire 22 s'éloigne ou se rapproche du piston primaire 16. Il est donc possible grâce à l'invention d'ajuster l'écartement maximal au repos entre les deux pistons de façon à obtenir l'obturation voulue du trou de dilatation secondaire dans le but de réduire la course morte du maître-cylindre. De plus, il est possible de réaliser cet ajustement par rotation de la tige 56 commandée de l'extérieur du maître-cylindre dans la cavité habituellement prévue à l'arrière du piston primaire. La tige 56 peut par exemple présenter une tête en forme de tête de vis ou équivalent.

Le procédé de l'invention va maintenant être exposé en référence à la Figure. Tout d'abord, on envoie un fluide sous pression dans la chambre secondaire 28 par son orifice de sortie.

A ce moment, à l'aide d'un outil approprié introduit par l'arrière dans la cavité du piston primaire, ainsi qu'il a été dit plus haut, on fait tourner la tige 56 pour laisser avancer à son tour le piston secondaire sous l'effet du ressort primaire 26 présentant au repos une précontrainte supérieure à celle du ressort secondaire 30 jusqu'à ce que la coupelle 18 vienne obturer le trou de dilatation secondaire 38.

La détection de l'obturation du trou de dilatation secondaire peut s'effectuer par de nombreux moyens. Par exemple, le fluide sous pression injecté dans la chambre secondaire peut être gazeux ou hydraulique. La détection de l'obturation du trou de dilatation se fait très facilement par exemple par détection de l'arrêt de l'écoulement de ce fluide par l'orifice 42, ou par détection de l'augmentation de pression dans la chambre secondaire indiquant immédiatement l'obturation du trou de dilatation secondaire.

On fait ensuite reculer le piston secondaire d'une distance pré-déterminée correspondant au diamètre du trou de dilatation en faisant tourner en sens inverse la tige 56, de manière à re-ouvrir le trou de dilatation 38 de la quantité voulue.

On peut alors immobiliser en rotation la tige 56 par rapport au piston primaire par tout moyen : un écrou vissé sur cette tige si celle-ci dépasse dans la cavité située à l'arrière du piston primaire, cet écrou faisant ainsi office de contre-écrou, ou utiliser pour les filetages de la tige 56 et du piston primaire 16 des systèmes autobloquants ou autofreinés.

Après ces opérations, on est ainsi assuré que l'obturation du trou de dilatation secondaire interviendra de façon à ce que la course morte du piston secondaire se trouve réduite à son minimum. Cela impose que la coupelle 18 reste parfaitement à sa place dans le piston, dans la position repos, même si la chambre secondaire a auparavant subi une dépression, ce que l'on obtient à l'aide de la coupelle 66. Bien évidemment, d'autres moyens bien connus de l'homme du métier peuvent être employés pour réduire la course morte du maître-cylindre relative au circuit primaire, bien que cela ne soit pas vraiment nécessaire.

On a donc bien réalisé selon l'invention un maître-cylindre dont on peut régler à volonté la course morte après son assemblage, et ce selon un procédé particulièrement simple à mettre en oeuvre, sans qu'il soit besoin de démonter ce maître-cylindre pour effectuer le réglage et le remonter ensuite, et par conséquent avec un gain de temps et de coût évidents. De plus, de par sa simplicité même, le procédé de réglage qui vient d'être décrit peut facilement être réalisé automatiquement et robotisé dans une production en série avec un contrôle unitaire de chaque pièce produite.

Bien entendu, l'invention n'est pas limitée au mode de réalisation qui vient d'être décrit, mais est susceptible de recevoir de nombreuses modifications qui apparaîtront à l'homme du métier et qui rentrent dans son cadre. C'est ainsi que, par exemple l'invention peut s'appliquer à d'autres types de maître-cylindre. De même, l'invention s'applique aussi bien à des maîtres-cylindres commandés par un servomoteur d'assistance qu'à ceux qui sont directement commandés par la pédale de freinage.

## Revendications

1. Procédé de réglage de la course morte d'un maître-cylindre en tandem, le maître-cylindre en tandem comprenant dans un alésage (12) un piston primaire (16) définissant avec un piston secondaire (22), une chambre primaire (24) , le piston secondaire (22) définissant avec le fond de l'alésage (12) une chambre secondaire (28), les chambres primaire (24) et secondaire (28) ayant respectivement des orifices de sortie primaire et secondaire et des orifices de liaison (36,42) à un réservoir, les chambres primaire et secondaire (24, 28) étant respectivement associées à des trous de dilatation primaire (32) et secondaire (38) susceptibles d'être fermés respectivement par les pistons primaire et secondaire (16, 22), la face en regard de la chambre primaire (24) du piston secondaire (22) coopérant avec un manchon (50) dans lequel coulisse librement une tige filetée (56) solidaire du piston primaire (16) et portant une rondelle d'arrêt (58), un ressort primaire (26) maintenant écarté l'un de l'autre les dits pistons primaire et secondaire (16, 22) dont l'écartement maximal est limité par la dite rondelle d'arrêt (58) et un ressort secondaire (30) rappelant au repos les dits pistons primaire (16) et secondaire (22) et présentant une précontrainte au repos inférieure à celle du ressort primaire, le dit procédé comportant les étapes suivantes :
- mettre en place dans l'alésage les dits pistons (16, 22) et ressorts (26, 30)
- laisser le dit piston primaire au contact de sa butée d'arrêt au repos
- déplacer le piston secondaire (22) jusqu'à fermer le trou de dilatation secondaire (38)
- détecter la fermeture du trou de dilatation secondaire (38)
- déplacer le piston secondaire (22) jusqu'à juste re-ouvrir le trou de dilatation secondaire (38)
- détecter la re-ouverture du dit trou de dilatation secondaire (38)
- fixer le dit écartement maximal

2. Procédé selon la revendication 1, caractérisé en ce que la détection de l'ouverture ou de la fermeture du trou de dilatation secondaire est effectuée en injectant dans la chambre secondaire un fluide sous pression, par un orifice autre que le dit trou de dilatation secondaire (38) et en contrôlant le passage de ce fluide par ce dit trou de dilatation secondaire (38).

3. Procédé selon la revendication 2, caractérisé en ce que le dit fluide est un gaz sous pression.

4. Procédé selon l'une quelconque des revendications 1 à 3, caractérisé en ce que le piston secondaire (22) est déplacé sous l'effet du dit ressort primaire (26) et de la rotation de la dite tige filetée (56) vissée dans le piston primaire (16).

5. Maître-cylindre en tandem comprenant dans un alésage (12) un piston primaire (16) définissant avec un piston secondaire (22), une chambre primaire (24) , le piston secondaire (22) définissant avec le fond de l'alésage (12) une chambre secondaire (28), les chambres primaire (24) et secondaire (28) ayant respectivement des orifices de sortie primaire et secondaire et des orifices de liaison (36,42) à un réservoir, les chambres primaire et secondaire (24, 28) étant respectivement associées à des trous de dilatation primaire (32) et secondaire (38) susceptibles d'être fermés respectivement par les pistons primaire et secondaire (16, 22), la face en regard de la chambre primaire (24) du piston secondaire (22) coopérant avec un manchon (50) dans lequel coulisse librement une tige filetée (56) solidaire du piston primaire (16) et portant une rondelle d'arrêt (58), un ressort primaire (26) maintenant écarté l'un de l'autre les dits pistons primaire et secondaire (16, 22) dont l'écartement maximal est limité par la dite rondelle d'arrêt (58) et qun ressort secondaire (30) rappelant au repos les dits pistons primaire (16) et secondaire (22) et présentant une précontrainte au repos inférieure à celle du ressort primaire pour la mise en oeuvre du procédé selon l'une quelconque des revendications précédentes, caractérisé en ce qu'il comporte des moyens pour faire varier l'écartement maximal entre les pistons primaire (16) et secondaire (22) depuis l'extérieur du dit maître-cylindre.

6. Maître-cylindre en tandem selon la revendication 4, caractérisé en ce qu'un orifice taraudé est pratiqué dans le piston primaire de manière à le traverser totalement, l'extrémité de la dite tige filetée (56) coopérant avec le filetage de cet orifice et étant accessible de l'extérieur du maître-cylindre pour assurer le réglage du dit écartement maximal.

7. Maître-cylindre en tandem selon la revendication 6, caractérisé en ce qu'un joint d'étanchéité est disposé entre la dite tige (56) et le dit piston primaire (16).

## Patentansprüche

1. Verfahren zum Einstellen des Totgangs eines Tandemhauptzylinders, wobei der Tandemhauptzylinder in einer Bohrung (12) einen Primärkolben (16) aufweist, der mit einem Sekundärkolben (22) eine Primärkammer (24) bildet, wobei der Sekundärkolben (22) mit dem Boden der Bohrung (12) eine Sekundärkammer (28) bildet, wobei die Primär- und die Sekundärkammer (24, 28) Primärausgangs- und Sekundärausgangsöffnungen bzw. Öffnungen (36, 42) zur Verbindung mit einem Behälter aufweisen, die Primär- und die Sekundärkammer (24, 28) einem Primärausdehnungsloch (32) bzw. einem Sekundärausdehnungsloch (38) zugeordnet sind, die durch den Primär- bzw. den Sekundärkolben (16, 22) geschlossen werden können, wobei die Fläche gegenüber der Primärkammer (24) des Sekundärkolbens (22) mit einer Hülse (50) zusammenwirkt, in der ein Stift (56) mit einem Außengewinde frei gleitet, der mit dem Primärkolben (16) fest verbunden ist und eine Sicherungsscheibe (58) aufweist, wobei eine Primärfeder (26) den Primär- und den Sekundärkolben (16, 22) voneinander im Abstand hält, deren maximaler Abstand durch die Sicherungsscheibe (58) begrenzt ist, und eine Sekundärfeder (30) den Primär- und den Sekundärkolben (16, 22) in die Ruhestellung zurückstellt und in der Ruhestellung eine Vorbelastung aufweist, die unter der der Primärfeder liegt, wobei das Verfahren die folgenden Schritte aufweist:
- die Kolben (16, 22) und die Federn (26, 30) werden in die Bohrung eingesetzt;
- der Primärkolben wird in der Ruhestellung in Kontakt mit seiner Sicherungsscheibe gelassen;
- der Sekundärkolben (22) wird verschoben, bis das Sekundärausdehnungsloch (38) verschlossen ist;
- der Verschluß des Sekundärausdehnungslochs (38) wird erfaßt;
- der Sekundärkolben (22) wird verschoben, bis das Sekundärausdehnungsloch (38) gerade wieder geöffnet ist;
- die Wiederöffnung des Sekundärausdehnungslochs (38) wird erfaßt;
- der maximale Abstand wird festgelegt.

2. Verfahren nach Anspruch 1, dadurch gekennzeichnet, daß die Erfassung der Öffnung oder des Verschlusses des Sekundärausdehnungslochs dadurch bewirkt wird, daß durch eine andere Öffnung als das Sekundärausdehnungsloch (38) in die Sekundärkammer ein unter Druck stehendes Fluid eingeblasen und der Durchgang des Fluids durch das Sekundärausdehnungsloch (38) überwacht wird.

3. Verfahren nach Anspruch 2, dadurch gekennzeichnet, daß das Fluid ein unter Druck stehendes Gas ist.

4. Verfahren nach einem der Ansprüche 1 bis 3, dadurch gekennzeichnet, daß der Sekundärkolben (22) unter der Wirkung der Primärfeder (26) und der Drehung des in den Primärkolben (16) eingeschraubten Stifts (56) mit Außengewinde verschoben wird.

5. Tandemhauptzylinder, der in einer Bohrung (12) einen Primärkolben (16) aufweist, der mit einem Sekundärkolben (22) eine Primärkammer (24) bildet, wobei der Sekundärkolben (22) mit dem Boden der Bohrung (12) eine Sekundärkammer (28) bildet, wobei die Primär- und die Sekundärkammer (24, 28) Primärausgangs- und Sekundärausgangsöffnungen bzw. Öffnungen (36, 42) zur Verbindung mit einem Behälter aufweisen, die Primär- und die Sekundärkammer (24, 28) einem Primärausdehnungsloch (32) bzw. einem Sekundärausdehnungsloch (38) zugeordnet sind, die durch den Primär- bzw. den Sekundärkolben (16, 22) geschlossen werden können, wobei die Fläche gegenüber der Primärkammer (24) des Sekundärkolbens (22) mit einer Hülse (50) zusammenwirkt, in der ein Stift (56) mit einem Außengewinde frei gleitet, der mit dem Primärkolben (16) fest verbunden ist und eine Sicherungsscheibe (58) aufweist, wobei eine Primärfeder (26) den Primär- und den Sekundärkolben (16, 22) voneinander in Abstand hält, deren maximaler Abstand durch die Sicherungsscheibe (58) begrenzt ist, und eine Sekundärfeder (30) den Primär- und den Sekundärkolben (16, 22) in die Ruhestellung zurückstellt und in der Ruhestellung eine Vorbelastung aufweist, die unter der der Primärfeder liegt, zur Durchführung des Verfahrens nach einem der vorhergehenden Ansprüche, dadurch gekennzeichnet, daß er Mittel aufweist, um den maximalen Abstand zwischen dem Primär- und dem Sekundärkolben (16, 22) von außerhalb des Hauptzylinders zu verändern.

6. Tandemhauptzylinder nach Anspruch 4, dadurch gekennzeichnet, daß in dem Primärkolben eine Öffnung mit einem Innengewinde so vorgesehen ist, daß sie ihn vollständig durchsetzt, wobei das Ende des Stifts (56) mit einem Außengewinde mit dem Gewinde der Öffnung zusammenwirkt und von außerhalb des Hauptzylinders zugänglich ist, um die Einstellung des maximalen Abstands sicherzustellen.

7. Tandemhauptzylinder nach Anspruch 6, dadurch gekennzeichnet, daß zwischen dem Stift (56) und dem Primärkolben (16) ein Dichtungsring angeordnet ist.

## Claims

1. Method for adjusting the lost motion in a tandem master cylinder, the tandem master cylinder comprising, in a bore (12), a primary piston (16) defining with a secondary piston (22) a primary chamber (24), the secondary piston (22) defining with the bottom of the bore (12) a secondary chamber (28), the primary (24) and secondary (28) chambers having respectively primary and secondary outlet orifices and orifices (36, 42) for connection to a reservoir, the primary and secondary chambers (24, 28) being respectively associated with primary (32) and secondary (38) expansion holes able to be closed respectively by the primary and secondary pistons (16, 22), the face of the secondary piston (22) opposite the primary chamber (24) cooperating with a sleeve (50) in which a threaded rod (56) solidly connected to the primary piston (16) and carrying a stop washer (58) slides freely, a primary spring (26) maintaining the separation one from the other of said primary and secondary pistons (16, 22) whose maximum separation is limited by said stop washer (58) and a secondary spring (30) urging to the rest position said primary (16) and secondary (22) pistons and presenting a preload at rest less than that of the primary spring, said method comprising the following steps:
- placing said pistons (16, 22) and springs (26, 30) in the bore
- leaving said primary piston in contact with its rest stop
- moving the secondary piston (22) until it closes the secondary expansion hole (38)
- detecting the closure of the secondary expansion hole (38)
- moving the secondary piston (22) until the secondary expansion hole (38) just reopens
- detecting the reopening of said secondary expansion hole (38)
- setting said maximum separation

2. Method according to Claim 1, characterized in that detecting the opening or closing of the secondary expansion hole is carried out by injecting into the secondary chamber a fluid under pressure, through an orifice other than said secondary expansion hole (38), and by checking the passage of this fluid through this said secondary expansion hole (38).

3. Method according to Claim 2, characterized in that said fluid is a gas under pressure.

4. Method according to any one of Claims 1 to 3, characterized in that the secondary piston (22) is moved under the effect of said primary spring (26) and of the rotation of said threaded rod (56) screwed into the primary piston (16).

5. Tandem master cylinder comprising, in a bore (12), a primary piston (16) defining with a secondary piston (22) a primary chamber (24), the secondary piston (22) defining with the bottom of the bore (12) a secondary chamber (28), the primary (24) and secondary (28) chambers having respectively primary and secondary outlet orifices and orifices (36, 42) connecting to a tank, the primary and secondary chambers (24, 28) being respectively associated with primary (32) and secondary (38) expansion holes, able to be closed respectively by the primary and secondary pistons (16, 22), the face of the secondary piston (22) opposite the primary chamber (24) cooperating with a sleeve (50) in which a threaded rod (56) solidly attached to the primary piston (16) and carrying a stop washer (58) slides freely, a primary spring (26) maintaining the separation one from the other of the said primary and secondary pistons (16, 22) whose maximum separation is limited by said stop washer (58), and a secondary spring (30) urging to the rest position the primary (16) and secondary (22) pistons and presenting a preload at rest less than that of the primary spring, for carrying out the method according to any one of the preceding claims, characterized in that it comprises means for varying the maximum distance between the primary (16) and secondary (22) pistons from outside said master cylinder.

6. Tandem master cylinder according to Claim 4, characterized in that a threaded orifice is made all the way through the primary piston, the end of said threaded rod (56) cooperating with the thread of this orifice and being accessible from outside the master cylinder for assuring the adjustment of said maximum separation.

7. Tandem master cylinder according to Claim 6, characterized in that a seal is placed between said rod (56) and said primary piston (15).
